Europäisches Patentamt

(19) European Patent Office

Office européen des brevets

(11) Publication number: **0 109 007**
**A2**

(12) # EUROPEAN PATENT APPLICATION

(21) Application number: **83110970.7**

(22) Date of filing: **03.11.83**

(51) Int. Cl.³: **G 06 K 15/22**

(30) Priority: **15.11.82 US 441575**

(43) Date of publication of application: **23.05.84**
**Bulletin 84/21**

(84) Designated Contracting States: **DE FR GB NL**

(71) Applicant: **TEKTRONIX, INC., D/S Y3-121 4900 S.W.**
**Griffith Drive P.O. Box 500, Beaverton Oregon 97077 (US)**

(72) Inventor: **Mutton, Jon C., 18330 S.W. River Road,**
**Milwaukie Oregon 97222 (US)**

(74) Representative: **Strasse, Joachim, Dipl.-Ing. et al,**
**Strasse und Stoffregen Patentanwälte München**
**Zweibrückenstrasse 15, D-8000 München 2 (DE)**

(54) **An initializing apparatus for use with an incremental plotter.**

(57) An initializing apparatus for use with an incremental plotter is disclosed. When a new line is drawn on a plotter, it is often desired that a starting point of said new line register and coincide with an end point of a previously drawn line. Sometimes, the starting point and the end point do not coincide. As a result, the present invention is directed to an initializing apparatus used in conjunction with the incremental plotter for performing an initializing operation on each pen selected by said plotter in order to ensure that the end-point and starting points coincide. The initializing apparatus comprises an X-axis photosensor, including first and second sensors, oppositely disposed with respect to a first light source, and a Y-axis photosensor, including first and second sensors, orthogonally disposed with respect to said X-axis photosensor and oppositely disposed with respect to a second light source. The operation of the initializing apparatus comprises the following steps. Each pen selected by said plotter is placed in said apparatus. The selected pen moves in the X and Z directions until the output signal from each of the first and second sensors associated with said X-axis photosensor drop to 5o% of its maximum value, the maximum value being obtained when the entire surface area of each said sensor is exposed by light from said light source. The selected pen moves in the Y direction until the output signal from the first sensor associated with said Y axis photosensor is equal to the output signal from the second sensor associated with the Y axis photosensor.

## AN INITIALIZING APPARATUS FOR USE WITH
## AN INCREMENTAL PLOTTER

### Background of the Invention

### Field of the Invention

The subject matter of the present invention pertains to an initializing apparatus for use with an incremental plotter for performing an initializing operation on a pen selected by said plotter.

### Description of the Prior Art

Incremental plotters of the prior art include a plurality of pens and a mechanism including a pen holder for selecting a pen, placing said pen within said pen holder, drawing a line on the plotter, replacing the pen, selecting another pen, placing said another pen within said pen holder, and drawing another line on the plotter.

Often, it is desired that an end-point of one line drawn on the plotter by one pen register and coincide with a starting point of another line drawn thereon by another pen. However, the physical configuration of said one pen is usually different than the physical configuration of said another pen. If said another pen rotates within the pen holder, it would be difficult to draw said another line in registration with said one line on the incremental plotter. In addition, incremental plotters often further include an automatic pen exchange mechanism. This mechanism introduces additional tolerance error, complicating the above-mentioned registration problem.

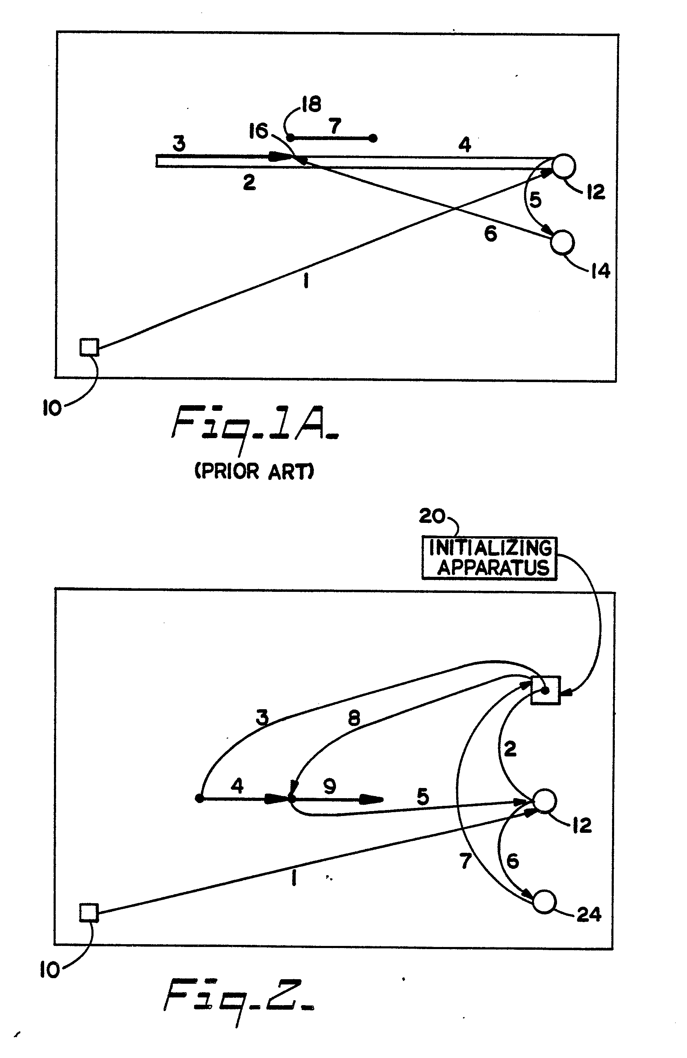

For example, in FIG. 1a, a pen-holder 10 moves along path 1 to a first pen 12. Path 2 is traced to a starting location wherein line 3 is drawn on the plotter. The first pen 12 is replaced, via path 4, and a second pen 14 is selected, via path 5. The pen-holder 10, holding pen 14, is moved to a position correspond-
ing to an end-point 16 of line 3, via path 6. However,
since pen 14 may have a different physical configuration associated therewith, relative to pen 12, and if
pen 14 rotates within pen-holder 10, a registration
problem is created, wherein a starting point 18 of
said another line (line 7) will not coincide with the
end-point 16 of said one line (line 3).

In figure 1b, a prior art drive control system is
illustrated which is responsible for producing the
above mentioned registration problem. The drive control system drives said one pen and said another pen
in the manner illustrated in figure 1a of the draw-
ings. In figure 1b, a data source, such as a graphics
display terminal, develops an output signal indicative
and representative of, for example, an image displayed
thereon. A plotter control 26 receives said output
signal and develops an X position control signal, a Y
position control signal, and a Z position control
signal in response thereto. A vector generator 40 receives the X, Y, and Z position control signals from
the plotter control 26 and energizes X, Y, and Z motor
drive circuits 42, 44, and 56, respectively, in response thereto for moving a pen in the X, Y, and Z
directions via X, Y, and Z axis motors 46, 48, and 58,
respectively.

## Summary of the Invention

It is therefore a primary object of the present
invention to provide an initializing apparatus for use
in combination with an incremental plotter, the
initializing apparatus performing an initializing
operation on a pen each time said pen is selected by
said plotter.

It is another object of the present invention to
provide an initializing apparatus for use with the incremental plotter, the initializing apparatus performing an initializing operation on a pen each time
said pen is selected by said plotter, the initializing
operation taking into account the position of the pen-
point of said pen relative to a fixed coordinate system of said plotter.

These and other objects of the present invention
are accomplished by providing an initializing apparatus for use in conjunction with an incremental plotter for performing an initializing operation on a pen
each time said pen is selected by said plotter. During
the initializing operation, the initializing apparatus
takes into account the position of the pen-point of
said pen relative to a fixed coordinate system of said
plotter. As a result, X, Y, and Z offset signals are
developed for offsetting said X, Y, and Z position
control signals (of figure 1b) by an amount required
to take into account the position of the pen-point of
said pen relative to said fixed coordinate system of
said plotter. The initializing apparatus comprises a
first set of photosensors connected to an X-drive for
driving the selected pen in the X-direction and a
second set of photosensors orthogonally disposed with
respect to the first set of photosensors and connected
to a Y-drive for driving the selected pen in the Y-
direction. A light source is oppositely disposed with
respect to both the first and the second set of photosensors for directing a beam of light thereto. When
the selected pen is placed in said initializing
apparatus, it is moved simultaneously in the X and Z
directions until 50% of the light from the light
source, directed to each of the first set of photosensors, is occluded. The selected pen is then moved
in the Y-direction until an equal amount of light from
the light source, directed to each of the second set
of photosensors, is occluded. Consequently, 50% of the surface area associated with each of the first set of photosensors has a shadow cast thereon, and an equal amount of the surface area associated with each of the second set of photosensors has a shadow cast thereon.

When the initializing operation performed by the initializing apparatus is complete, the position of the pen-point of each selected pen relative to a fixed coordinate system of the plotter will be taken into account. In addition, the various tolerances associated with the pen-holder and the components associated with the automatic pen-exchange are taken into account. Having taken these variables into account, when the plotter draws said another line on said plotter, the end-point of said one line will coincide with the starting point of said another line drawn on said plotter.

Further scope of applicability of the present invention will become apparent from the description given hereinafter. However, it should be understood that the details of the description and the specific examples, while indicating preferred embodiments of the invention, are given by way of illustration only, since various changes and modifications within the spirit and scope of the invention will become apparent to those skilled in the art from the detailed description.

## Brief Description of the Drawings

A full understanding of the present invention will be obtained from the detailed description given hereinbelow and the accompanying drawings, which are given by way of illustration only, and thus are not limitative of the present invention, and wherein:

FIG. 1a illustrates the results of the operation of an incremental plotter without the use of the initializing apparatus of the present invention in conjunction therewith and the resultant deterioration in performance as a result thereof;

FIG. 1b illustrates a prior art drive control system for an incremental plotter producing the results illustrated in figure 1a.

FIG. 2 illustrates the results of the operation of the incremental plotter with the use of the initializing apparatus of the present invention in conjunction therewith and a resultant improvement in performance as a result thereof;

FIG. 3 illustrates the construction of one embodiment of the initializing apparatus of the present invention;

FIG. 4 illustrates the initializing apparatus of the present invention in combination with a new drive control system used in conjunction therewith; and

FIG. 5 illustrates the construction of an initializer control, one component of the new drive control system illustrated in figure 4.

FIG. 6 illustrates a plurality of timing waveforms representative of the voltages existing within various portions of the new drive control system illustrated in figures 4 and 5.

FIG. 7 illustrates in detail the construction of another embodiment of the initializing apparatus of the present invention.

<u>Detailed Description of the Preferred Embodiment</u>

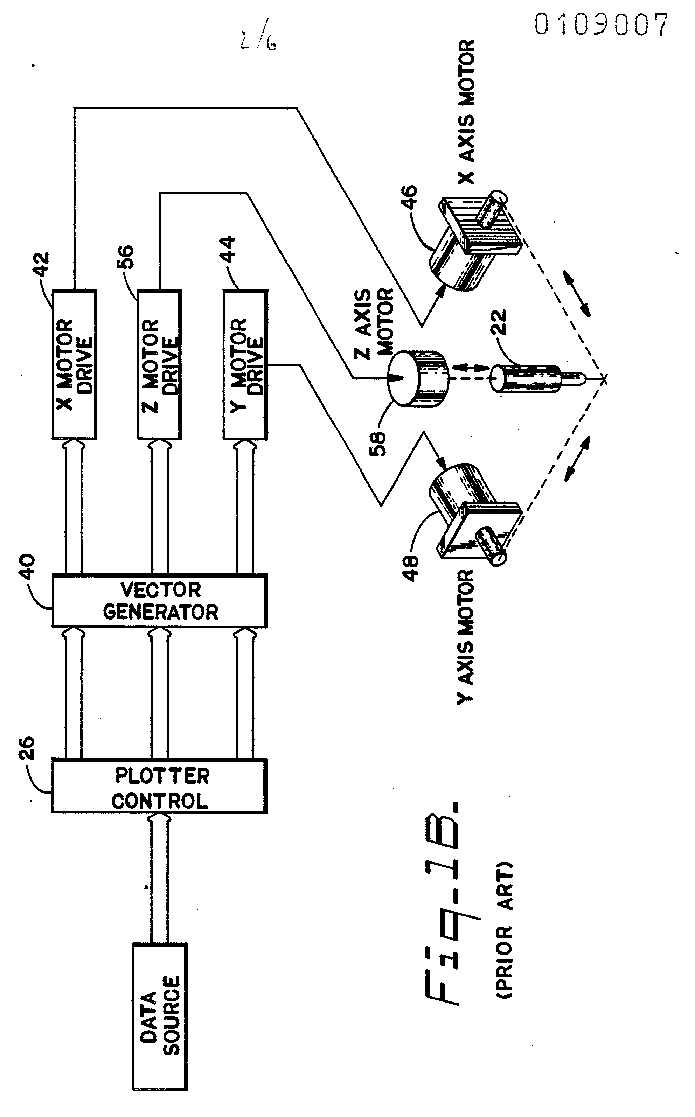

The advantages achieved by virtue of the present invention can best be appreciated and understood by reference to FIG. 2 of the drawings. In FIG. 2, a result of the operation of an initializing apparatus 20 in accordance with the present invention is illustrated. An incremental plotter is utilized for reproducing an image appearing on a display or for producing an original image from data supplied by a computer. The incremental plotter includes a pen-holder 10 for holding a pen therein. The pen holder 10 of said incremental plotter selects a first pen 12 via path 1. Having the first pen 12 disposed therein, the pen holder 10 places the pen 12 into the initializing apparatus 20 via path 2. The initializing apparatus performs an initializing operation on pen 12, wherein the location of the pen-point of pen 12 relative to a fixed coordinate system of the plotter is taken into consideration.

The first pen 12 is moved to the starting point of line 4 via path 3. The plotter draws line 4 using pen 12. The plotter replaces the first pen 12 and selects a second pen 14. The second pen 14 is also placed in the initializing apparatus 20, and an initializing operation is performed thereon. After the initializing operation, performed on the second pen 14, is complete, the plotter moves the second pen 14 to the starting point of line 9, via path 8. The plotter draws line 9.

As a result of the initializing operation individually performed on pens 12 and 14, as shown in figure 2, the starting point of line 9 coincides with the end point of line 4. This is in sharp contrast with FIG. 1a, wherein the starting point of line 7 did not coincide with the end point of line 3.

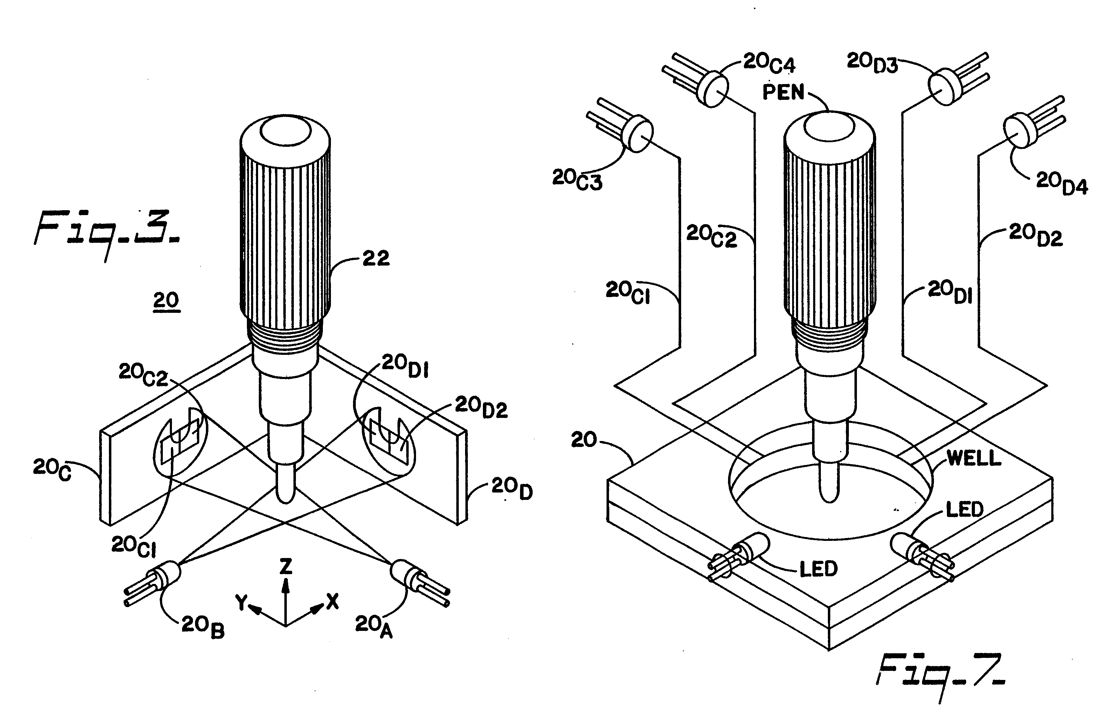

The initializing apparatus 20 shown in FIG. 2 is illustrated in detail in FIG. 3 of the drawings of the present application. Referring to FIG. 3, the initializing apparatus 20 comprises a first light source 20a and a second light source 20b. The first light source 20a may be referred to as the X light source, and the second light source 20b may be referred to as the Y light source. A first photosensor 20c is disposed oppositely with respect to said X light source 20a thereby receiving the light emitted therefrom. A second photosensor 20d is disposed oppositely with respect to said Y light source 20b thereby receiving the light emitted therefrom. The first photosensor 20c comprises a first sensor 20c1 and a second sensor 20c2. The second photosensor 20d comprises a first sensor 20d1 and a second sensor 20d2. Each of the first and second sensors (20c1, 20c2, 20d1, 20d2) associated with each of the first and second photosensors (20c and 20d) develop output signals therefrom when exposed to light emitted from the light sources 20a and 20b, respectively, the magnitude of the output signal developed from each sensor being a maximum value when the entire surface area thereof is exposed by light from the respective light source.

A pen 22 is adapted to be disposed within the initializing apparatus 20, the pen disposed therein blocking or occluding the light emitted from the first and second light sources, 20a and 20b, respectively. When the pen 22 blocks the light emitted from the first and second light sources, 20a and 20b, respectively, a shadow is imposed upon one or more of the sensors associated with the first and second photosensors, 20c and 20d, respectively. When a shadow is imposed upon a sensor associated with a photosensor, the magnitude of the output signal developed therefrom falls from its maximum value.

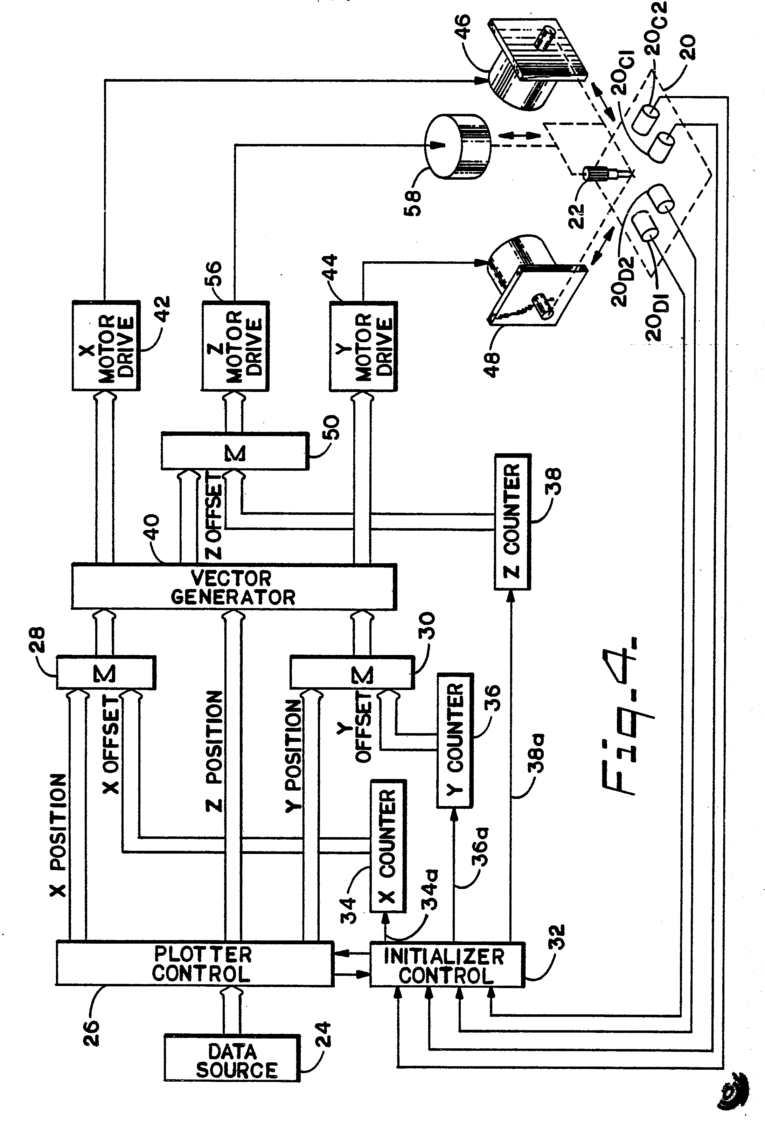

Referring to FIG. 4, the initializing apparatus 20 of the present invention, as shown in FIG. 3, is illustrated in combination with a new drive control system associated with the incremental plotter. In FIG. 4, a data source 24 is illustrated, the data source being, for example, a host computer or a graphics display terminal. The data source 24 is connected to the plotter control 26 of figure 1b. The plotter control 26 generates X, Y, and Z position control signals therefrom in response to instructions from the data source 24. The plotter control 26 has a first output terminal thereof connected to a first summer 28, a second output terminal thereof connected to a second summer 30, and a third output terminal thereof connected to a vector generator 40. Said first output terminal supplies the X position control signal to said first summer 28. Said second output terminal supplies the Y position control signal to said second summer 30. Said third output terminal supplies the Z position control signal to said vector generator 40.

Connected to the plotter control 26 is an initializer control 32 for supplying a "stop" signal to and receiving a "start" signal from said plotter control, for processing the output signals received from the sensors 20c and 20d, and for initiating the development of X, Y, and Z offset signals in response thereto. An X-counter 34, a Y-counter 36, and a Z-counter 38 are connected to a first, a second, and a third output terminal, respectively, of the initializer control 32, the X-counter, Y-counter, and Z-counter developing the X, Y, and Z offset signals, respectively, in response to output signals developed from the initializer control 32 at the first, second, and third output terminals thereof.

The first summer 28 receives the X-offset signal from the X-counter 34 in addition to the X-position control signal from the plotter control 26. The second summer 30 receives the Y-offset signal from the Y-counter 36 in addition to the Y-position control signal from the plotter control 26.

The vector generator 40 is connected, at a first and second input terminal thereof, to an output terminal of the first summer 28 and the second summer 30, respectively. The output terminal of the first summer 28 supplies an output signal to the vector generator 40 indicative of the sum of the X position control signal and the X-offset signal. The output terminal of the second summer 30 supplies an output signal to the vector generator 40 indicative of the sum of the Y position control signal and the Y-offset signal. Further, the vector generator 40 is connected, at a third input terminal thereof, to the third output terminal of the plotter control, the third output terminal of the plotter control supplying the Z-position control signal to the vector generator 40. The vector generator 40 develops X, Y, and Z control signals in response to the output signals developed from the first summer 28 and the second summer 30, respectively and in response to the Z-position control signal developed from the plotter control. The X and Y control signals energize an X motor drive 42 and a Y motor drive 44, respectively, for driving an X axis motor 46 and a Y axis motor 48. The X and Y axis motors 46 and 48 drive the pen 22 in the X and Y directions.

The Z offset signal developed from the Z counter 38 is applied to one input terminal of a third summer 50. The Z control signal from the vector generator 40 is applied to another input terminal of said third summer.

The third summer 50 generates an output signal indicative of the sum of the Z offset signal and the Z control signal, the output signal from the third summer 50 energizing a Z motor drive 56. The Z motor drive 56 drives a Z axis motor 58 for moving the pen 22 in the Z-direction.

Alternatively, in lieu of generating the Z control signal from the vector generator 40, energizing the third summer 50, a height control circuit (not shown) could be utilized to generate the Z control signal. The height control circuit would receive actual height information, that is, information with regard to the actual height of the pen 22 from the surface of the incremental plotter, from a height sensor attached to pen 22. The height control circuit would receive desired height information, that is, information with regard to the desired height of pen 22 from the surface of the incremental plotter, from the plotter control 26 via the initializer control circuit 32. In response to the actual and the desired height information, the height control circuit 52 would generate the Z control signal in response thereto, the Z control signal energizing the third summer 50.

The sensors 20c1, 20c2 associated with the first photosensor 20c and the sensors 20d1 and 20d2 associated with the second photosensor 20d are connected to the initializer control 32. As mentioned hereinabove, each of the X and Y-axis sensors 20c1, 20c2, 20d1, and 20d2 develop output signals therefrom indicative of the amount of light imposed thereon from the light sources 20a and 20b, the output signals from each of the X and Y axis sensors energizing the initializer control 32.

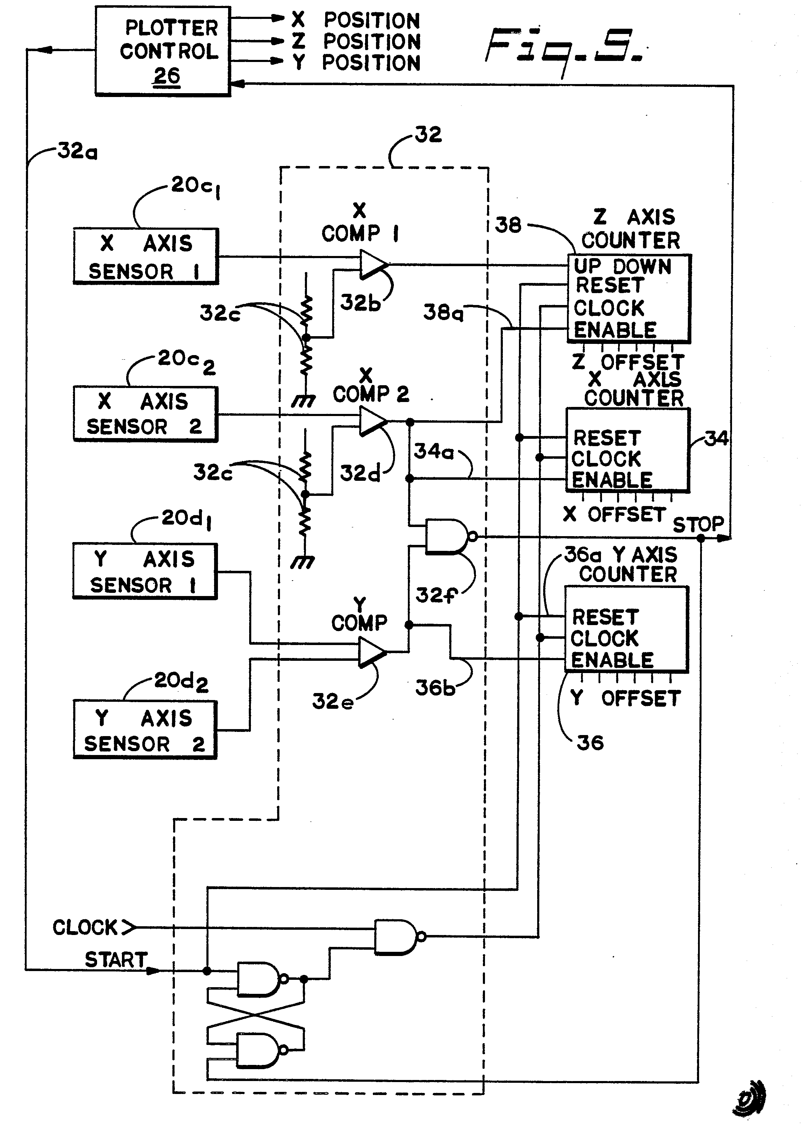

Referring to figure 5, a detailed construction of the initializer control 32 is illustrated. The initializer control 32 is connected to the plotter control 26 via line 32a for receiving a "start" signal therefrom. When the plotter control 26 energizes the X, Y, and Z axis motors, placing the selected pen 22 into the initializing apparatus, the "start" signal is generated therefrom, via line 32a. In response to the "start" signal, the X, Y, and Z axis counters 34, 36, and 38 are reset to zero. When said counters are reset to zero, said counters are prepared to be enabled. When enabled, a clock signal, generated from an external clock signal generator, energizes said counters for commencing their counting operations.

The initializer control 32 enables said counters in response to the output signals from the first and second photosensors. Said initializer control comprises a first comparator 32b, having one input terminal thereof connected to the sensor 20c1 associated with the first photosensor 20c. The other input terminal of comparator 32b is connected to a voltage divider network 32c including resistors $R_1$, $R_2$ energized by a voltage source "V". The initializer control 32 further comprises a second comparator 32d and a third comparator 32e. The second comparator 32d has one input terminal thereof connected to the sensor 20c2 associated with the first photosensor 20c, the other input terminal thereof also being connected to said voltage devider network 32c. The third comparator 32e has one input terminal thereof connected to the sensor 20d1, associated with the second photosensor 20d, the other input terminal thereof being connected to the sensor 20d2.

.An output terminal of the first comparator 32b is connected to an "up/down" terminal of the Z-axis counter 38. The Z axis counter 38 is an up/down counter, the counter 38 counting up in response to an

0109007

increase in voltage appearing at the "up/down" terminal thereof. An output terminal of the second comparator 32d is connected to an "enable" terminal of the Z axis counter 38, to the "enable" terminal of the X axis counter 34, and to one input terminal of a negative-output AND gate 32f. When an output signal is generated at said output terminal of said second comparator 32d, the X and Z axis counters are enabled. An output terminal of the comparator 32e is connected to another input terminal of the negative output AND gate 32f, and to an "enable" terminal of the Y axis counter 36. An output signal generated from the output terminal of said comparator 32e enables the Y-axis counter. An output terminal of the negative-output AND gate 32f is connected to the plotter control 26 for supplying a "Stop" signal thereto, indicative of the completion of the initializing operation performed by the initializing apparatus 20 of the present invention.

When the plotter control 26 receives the "stop" signal, the plotter control 26 causes the "start" signal, energizing the initializer control 32 via line 32a, to change state. That is, if the "START" signal was initially high, causing the X, Y, and Z axis counters to be reset to zero, when the "STOP" signal is received, the plotter control causes the "START" signal on line 32a to change its state from a high state to a low state. When the "START" signal changes state, the initializer control 32 is disabled. When the initializer control 32 is disabled, the counts in the respective X, Y, and Z axis counters remain unchanged.

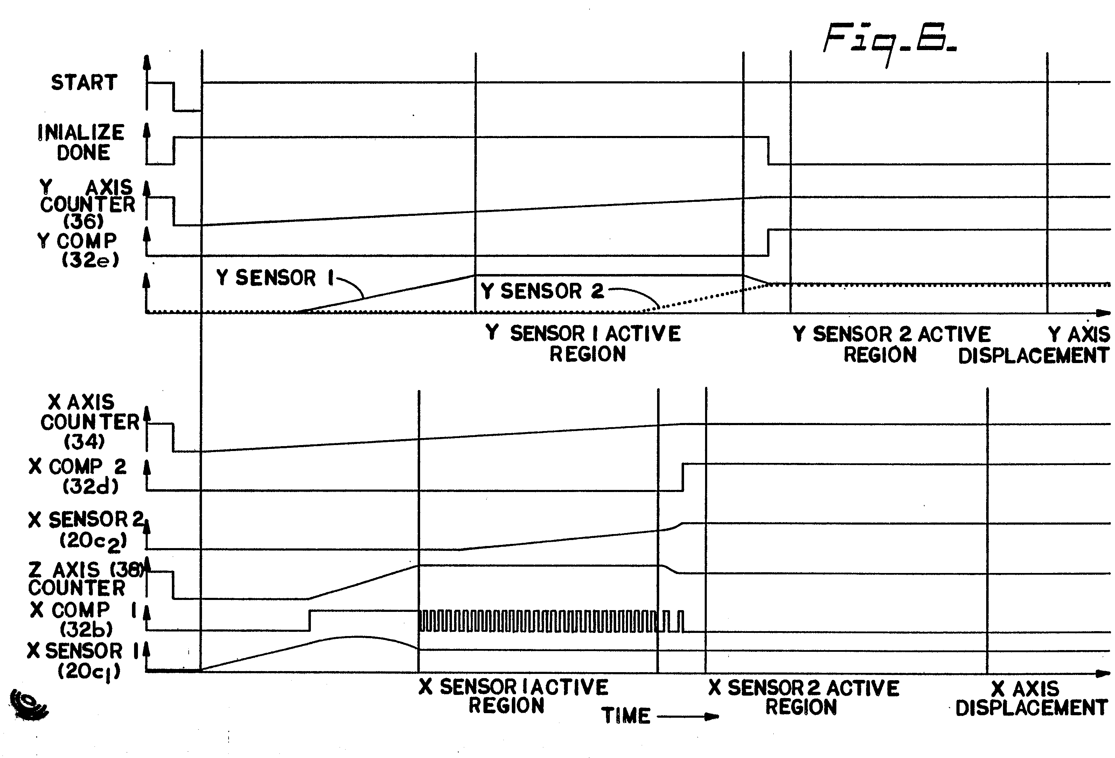

Referring to FIG. 6, a plurality of timing waveforms associated with the components of the initializer control 32 are illustrated.

Referring to FIG. 7, a perspective view of another embodiment of the initializing apparatus 20 of the present invention is illustrated. In particular, a detailed construction of a preferred type of photosensor 20c and 20d is illustrated. In FIG. 7, photosensor 20c may be comprised of a first optical fiber 20c1 and a second optical fiber 20c2. Each of these optical fibers 20c1 and 20c2 are connected to first and second phototransistors 20c3 and 20c4, respectively. The second photosensor 20d is also comprised of first optical fiber 20d1 and a second optical fiber 20d2. The first and second optical fibers 20d1 and 20d2 are connected to a third and fourth phototransistor 20d3 and 20d4, respectively.

Each of the optical fibers sense the light received from its light source, transmit the light therethrough, and develop an output signal in response thereto, the magnitude of the output signal being proportional to the amount of light received thereby.

A detailed description of the initializing operation performed by the initializing apparatus 20 of the present invention is presented in the paragraphs hereinbelow with reference to FIG. 2 and FIG. 3 of the drawings. Referring to FIG. 2, as mentioned hereinabove, the pen holder 10 selects a pen, and places the selected pen in the initializing apparatus 20 for performing the initializing operation thereon prior to using said pen to draw a line on the incremental plotter. The initializing apparatus 20 performs an initializing operation with respect to said pen in order to locate the position of the pen-point of the pen relative to a fixed coordinate system of said plotter. The pen is replaced, another pen is selected, and said another pen is placed in the initializing apparatus 20 of the present invention for performing the initializing operation thereon.

Referring to FIG. 3, when a pen 22 is placed in the initializing apparatus 20, it is initially placed in a position within said apparatus so as to avoid the light generated by the first and second light sources 20A and 20B. As a result, no shadow is cast upon either the first photosensor 20c or the second photosensor 20d. The plotter control 26 generates the "start" signal via line 32a, shown in figure 5. As a result, the X, Y, and Z axis counters are reset to zero, enabled, and, as a result thereof, the pen 22 begins to move in the X and Z directions. As the pen 22 is moved in the X and Z directions, it occludes a portion of the light generated by the first light source 20A.

The initializing apparatus 20 performs an initializing operation by monitoring the output signals developed from each of the first and second sensors 20c1 and 20c2 associated with the first photosensor 20c and from each of the first and second sensors 20d1 and 20d2 associated with the second photosensor 20d. However, the following requirements must be maintained in order for the initializing apparatus to accurately perform the initializing operation: The output signals from sensors 20c1 and 20c2 must be maintained at approximately 50% of their maximum values. The output signals from sensors 20d1 and 20d2 must be approximately equal to one another.

Therefore, as the pen moves in the X-direction, a portion of the light generated by the first light source 20A is occluded, and shadows are cast on the first photosensor as a result thereof. The output signals generated therefrom drop from their maximum values. As the drop in the output signal developed from the first sensor 20c1, associated with the first photosensor 20c, approaches 50% of its maximum value, in order to prevent said output signal from dropping below 50% of its maximum value, the count of the Z-axis counter is incremented. As a result, the pen 22 is elevated in the Z-direction. As the pen elevates in the Z-direction, the rate of decrease in the magnitude of the output signal developed from the first sensor 20c1 diminishes such that said magnitude is maintained at approximately 50% of its maximum value. For an instant, the pen elevates in the Z-direction accompanied by no movement of the pen in the X-direction. However, in order to maintain said output signal from the first sensor 20c1 at the 50% level, the pen must commence its movement in the X-direction and, simultaneously, reverse the direction of its movement in the Z-direction such that the pen 22 drops in elevation. As a result, the count of the Z-axis counter is decremented. As the pen 22 moves in the X-direction, and drops in elevation along the Z-direction, the pen 22 casts a shadow upon the second sensor 20c2 associated with the first photosensor 20c. As a result, the output signal developed from the second sensor 20c2 drops from its maximum value. The movement of the pen 22 along the X and the Z directions terminates when the magnitude of the output signal developed from each of the first and the second sensors 20c1 and 20c2, associated with the first photosensor, drops to approximately 50% of its respective maximum value.

At this point, the pen 22 moves in the Y direction, the pen continuing to move in the Y direction until the magnitude of the output signal from the first sensor 20d1 associated with the second photosensor 20d is approximately equal to the magnitude of the output signal generated by the second sensor 20d2 associated with the second photosensor 20d. As the pen 22 moves in the Y direction, a shadow is cast upon the first sensor 20d1 and on the second sensor 20d2. When the surface area of said first sensor 20d1, covered by said shadow, is approximately equal to the surface area of said second sensor 20d2, covered by said shadow, the output signal developed from the first sensor 20d1 is approximately equal to the output signal developed from the second sensor 20d2. At this point, the "stop" signal is generated from the initializer control 32, energizing the plotter control 26. The plotter control 26 changes the state of the "START" signal, energizing the initializer control 32 thereby disabling the initializer control and terminating the count in the X, Y, and Z axis counters. Therefore, as a result of the termination of the count in the X, Y, and Z axis counters, movement of the pen 22 along the Y direction terminates, and the initializing operation performed by the initializing apparatus of the present invention is complete.

In summary, the initializing operation performed by the initializing apparatus 20 of the present invention comprises two steps: (1) the movement of pen 22 in the X and the Z directions until each of the output signals developed from the first sensor 20c1 and the second sensor 20c2, associated with the first photosensor 20c drop to 50% of its maximum value, and (2) the movement of pen 22 in the Y direction until the output signal developed from the first sensor 20d1 associated with the second photosensor 20d is approximately equal to the output signal developed from the second sensor 20d2 associated with said second photosensor. As a result, when the pen 22 is removed from the initializing apparatus 20, as shown in FIG. 1a, and is moved to the end point 16 of the previous line (line 3) to begin drawing the next subsequent line (line 7) on the incremental plotter, since the initializing operation has been performed (i.e. - established appropriate offsets) on said pen, the starting point 18 of said next subsequent line will coincide with the end point 16 of said previously drawn line. Therefore, the lines drawn on the incremental plotter will appear to be in registration as illustrated in FIG. 2 of the drawings.

The functional operation of the control system used in implementing the aforementioned initializing operation performed by the initializing apparatus 20 of the present invention will be described in the paragraphs hereinbelow with reference to FIGs. 4, 5, and 6 of the drawings.

Referring to FIG. 4, the data source 24, representing a host computer or graphics display terminal, develops an output signal representative of an image to be copied on a sheet of copy paper mounted on the incremental plotter. The plotter control circuit 26 receives the output signal from the data source 24 and generates X, Y and Z position control signals for driving the pen, disposed in the pen holder 10, in the X, Y, and Z directions. At this point in time, the X counter 34, the Y counter 36, and the Z counter 38 are disabled. The X and Y position control signals from the plotter control 26 energize the vector generator 40, via summers 28 and 30, the vector generator developing X and Y control signals in response thereto. The X and Y control signals energize the X motor drive 42 and the Y motor drive 44 for driving the pen 22 in the X and Y directions on the incremental plotter via motors 46 and 48. The Z position control signal from the plotter control 26 energizes the vector generator, the vector generator developing the Z control signal thereform in response thereto. The Z control signal energizes the Z motor drive 56, via summer 50, for moving the pen 22 in the Z direction via Z-axis motor 58.

The data source 24 supplies the necessary instructions to the plotter control 26 for generating the X, Y, and Z position control signals to drive the selected pen in the X, Y, and Z directions via the X, Y, and Z axis motors 46, 48, and 58 for placing the selected pen 22 into the initializing apparatus 20 of the present invention. As long as the selected pen 22 is not physically placed in the initializing apparatus 20, the X, Y, and Z counters 34, 36, and 38 remain in the disabled condition. While the counters are disabled, the counts appearing therein remain unchanged. When the data source 24 instructs the plotter control 26 to place pen 22 in the initializing apparatus and the plotter control 26 places said pen 22 into said apparatus 20, the plotter control 26 develops the "START" signal, via line 32a, as shown in Fig. 5. The start signal resets the X, Y, and Z axis counters 34, 36, and 38 to zero. The first photosensor 20c develops output signals therefrom for enabling the X and Z axis counters 34 and 38 via comparator 32d. When enabled, a clock signal energizes a clock terminal of said X and Z axis counter for developing a count therein in response thereto. The X and Y axis counters are up-counters. Therefore, these counters only count in an up-direction. However, the Z-axis counter is an up/-down counter. An output signal from the second comparator 32b energizes the "up/down" terminal of the Z axis counter 38, this output signal determining whether the Z-axis counter counts up or counts down.

When the counts are being developed in the X, Y, and Z axis counters, the plotter control 26 does not generate X, Y, and Z position control signals therefrom. Therefore, the vector generator 40 via summer 28 develops an X control signal in response to the offset signal developed from the X counter 34. The X control signal developed from vector generator 40 energizes an X motor drive circuit 42 for driving pen 22 in the X direction via motor 46. The summer 50 develops the Z control signal in response to the offset signal from the Z counter 38, the Z control signal energizing the Z motor drive 56 for moving pen 22 in the Z-direction via Z axis motor 58.

When pen 22 moves in the X and Z directions, output signals are developed from sensors 20c1 and 20c2 (the X-axis sensors), energizing the initializer control 32, in the manner hereinbefore described with reference to FIG. 3. When the output signals from sensors 20c1 and 20c2 each fall below, and hunt around 50% of their maximum values, an output signal of the second comparator 32d of figure 5 disables the X and Z axis counters 34 and 38 via lines 34a and 38a and therefore terminates the development of a count in the X counter 34 and the Z counter 38. The counts present in the X and Z counters 34 and 38 remain unchanged, the X and Z offset signals developed therefrom as a result thereof offsetting the X and the Z positions of the pen 22, that is, offsetting the X position control signal and the Z position control signal developed from the plotter control 26.

When the counts of the X and the Z counters 34 and 38 are terminated, the second photosensor 20d enables said Y-counter 36 via the third comparator 32e. A clock signal energizes said y-axis counter 36. As a result, the Y-counter 36 begins its count. Since the output signals from sensors 20d1 and 20d2 are not equal, as shown in FIG. 5, the Y counter 36 continues to provide a count and to develop a Y offset signal in response thereto. Since at this point in time, there is no Y-position control signal developed from the plotter control 26, the vector generator 40 develops a Y control signal in response to the Y-offset signal developed from the Y counter 36. The Y control signal energizes a Y motor drive 44 for moving pen 22 in the Y direction via Y axis motor 48. As the pen 22 moves in the Y-direction, the output signals developed from the sensors 20d1 and 20d2 (the Y-axis sensors), energizing the initializer control 32, drop from their respective maximum values. When the output signal developed from sensor 20d1 approximately equals the output signal developed from sensor 20d2, the output signal developed from the third comparator 32e of figure 5 drops to a low value disabling the Y axis counter 36, via line 36b. This terminates the count of the Y- counter 36. Since an output signal is developed from comparator 32d and from comparator 32e, the AND gate 32f is enabled. An output signal is generated therefrom, representing the "STOP" signal, the output "STOP" signal energizing the plotter control 26. As a result thereof, the "START" signal appearing on line 32a, changes its STATE. As a result thereof, the clock signal no longer energizes the clock terminal of the X, Y, and Z axis counters, and the counts present in the X, Y, and Z counters 34, 36 and 38 remain unchanged. The Y-offset signal developed from the Y-counter offsets the Y-position of the pen 22, that is, offsets the Y-position control signal developed from the plotter control 26.

Since the counts remain unchanged, in the X, Y and Z counters 34, 36, and 38, when the data source 24 instructs the plotter control to develop X, Y, and Z position control signals for moving pen 22 in the X, Y, and Z directions, the X and Y position control signals, and the Z control signal will be modified by the X, Y, and Z offset signals defined by the counts in the X, Y, and Z counters 34, 36,and 38, respectively. Consequently, the X, Y, and Z position of pen 22 is also modified accordingly. Therefore, when the X, Y and Z axis motors move pen 22 to the starting point of a new line, e.g., point 18, in FIG. 1a, in response to the output signals from summers 28, 30, and 50, due to the modification of the aforementioned X and Y, position control signals and the Z control signal as a result of the X, Y, and Z offset signals from the X, Y, and Z counters, the starting point (18 of line 7) will register and coincide with the end point (16 of line 3) of the previously drawn line. The counts will remain unchanged in the X, Y, and Z axis counters until said counters are reset to zero by the "START" signal developed from the plotter control.

As a result of the initializing operation, which takes place subsequent to the selection of a new pen by the pen holder, the position of the penpoint of said new pen relative to a fixed coordinate system of the plotter will be taken into account. Therefore, the starting point for each new line drawn on the incremental plotter will coincide with the end point of a previously drawn line on the plotter. Therefore, the disadvantage associated with the plotters of the prior art, shown in FIG. 1a, has been eliminated by virtue of the initializing apparatus 20 of the present invention.

The invention being thus described, it will be obvious that the same may be varied in many ways. Such variations are not to be regarded as a departure from the spirit and scope of the invention and all such modifications as will be obvious to one skilled in the art are intended to be included within the scope of the following claims.

What I claim as novel is:

1.  An initializing apparatus for use in conjunction with an incremental plotter, said plotter including a plurality of pens, means for selecting a pen from said plurality of pens, and drawing means responsive to a resultant position control signal for drawing a line on said plotter using the selected pen in accordance with said position control signal, comprising:

locating means responsive to the selection of said pen by said means for selecting for locating the position of the pen-point of said selected pen relative to a fixed coordinate system of said plotter and developing an output signal indicative thereof in response thereto; and

means for modifying said resultant position control signal in accordance with said output signal from said locating means thereby producing a modified resultant position control signal, the  drawing means drawing said line on said plotter using the selected pen in accordance with said modified resultant position control signal.

2.  The initializing apparatus of claim 1 wherein said locating means comprises:

first light emitting means for emitting light;

first sensing means oppositely disposed with respect to said first light emitting means for sensing the amount of said light emitted therefrom;

second light emitting means for emitting light; and

second sensing means .oppositely disposed with respect to said second light emitting means for sensing the amount of said light emitted therefrom.

-23-

3.  The initializing apparatus of claim 2 wherein:

said first sensing means comprises a first sensor and a second sensor, said first and second sensors developing a first and second output signal in accordance with the amount of light received thereby,

said second sensing means comprises a first sensor and a second sensor, the first and second sensors developing a first and second output signal in accordance with the amount of light received thereby,

the magnitude of the output signals developed from the first and second sensors associated with said first and second sensing means being a maximum value when the entire surface area of said first and second sensors are exposed by said light received thereby; and

said locating means locating the position of the pen-point of said selected pen relative to said fixed coordinate system of said plotter when the magnitude of the output signals developed from the first and second sensors associated with said first sensing means each fall to approximately 50% of their maximum values, and when the output signal developed from the first sensor associated with said second sensing means is approximately equal to the output signal from the second sensor associated with said second sensing means.

4.  A method of locating the position of a pen-point of a pen relative to a fixed coordinate system, comprising the steps of:

interposing said pen between a first light source and a first light sensor means, said first light sensor means developing an output signal in accordance with the amount of light received thereby;

measuring the magnitude of said output signal from said first light sensor means;

interposing said pen between a second light source and a second light sensor means, said second light sensor means developing an output signal in accordance with the amount of light received thereby;

measuring the magnitude of said output signal from said second light sensor means; and

positioning the pen-point of said pen at a position located between the first light source and the first light sensor means and between the second light source and the second light sensor means such that the magnitude of said output signal from said first light sensor means achieves a first predetermined value and the magnitude of said output signal from said second light sensor means achieves a second predetermined value.

0109007

Fig. 1A.

(PRIOR ART)

INITIALIZING
APPARATUS

Fig. 2.

Fig_1B.

(PRIOR ART)

Fig.3.

20

22

20C2

20D1

20D2

20C

20C1

20D

20B

20A

Z

Y

X

Fig.7.

20C4

20D3

20C3

PEN

20C2

20D2

20C1

20D1

20D4

20

WELL

LED

LED

0109007

Fig. 4.

Fig.5.

0109007

Fig.6.